# EUROPÄISCHE PATENTSCHRIFT

(11) **EP 4 074 631 B1**
(45) Veröffentlichungstag und Bekanntmachung des Hinweises auf die Patenterteilung: **21.02.2024**
(21) Anmeldenummer: 21168939.3
(22) Anmeldetag: 16.04.2021
(51) Int. Cl.: B65G 17/20, B65G 19/02

(54) **TRANSPORTELEMENT FÜR EIN FÖRDERSYSTEM UND ANORDNUNG MIT EINER VEREINZELUNGSEINHEIT**
TRANSPORT ELEMENT FOR A CONVEYOR SYSTEM AND ARRANGEMENT WITH A SEPARATING UNIT
ÉLÉMENT DE TRANSPORT POUR UN SYSTÈME DE TRANSPORT ET AGENCEMENT DOTÉ D'UNE UNITÉ DE SÉPARATION

(43) Veröffentlichungstag der Anmeldung: 19.10.2022
(73) Patentinhaber: BEUMER Group GmbH & Co. KG, 59269 Beckum (DE)
(72) Erfinder: NEUGEBAUER, Jürgen, 8102 Semriach (AT)
(74) Vertreter: Angerhausen, Christoph

(56) Entgegenhaltungen:
- EP-A1- 3 670 393
- WO-A1-2020/007870

## Beschreibung

Die Erfindung betrifft eine Anordnung eines Transportelements und einer Vereinzelungseinheit mit den Merkmalen des Oberbegriffs des Anspruchs 1.

Ein Transportelement ist aus der EP 3 670 393 A1 bekannt. Eine Anordnung eines Transportelements mit einer Vereinzelungseinheit ist aus der WO 2020/007870 A1 bekannt, welche auch den Oberbegriff des Anspruchs 1 offenbart.

Ein weiteres Transportelement ist aus der EP 2 363 358 B1 bekannt. Eine Vereinzelungseinheit ist aus der EP 2 121 488 B1 bekannt.

Fördersysteme weisen in der Regel eine Vielzahl Transportelemente auf. Beispielsweise für eine effiziente Transportstreckensteuerung oder Routenführung müssen die Transportelemente dabei zweckmäßig vereinzelt werden. Insbesondere muss sichergestellt sein, dass die Transportelemente eine Vereinzelungseinheit nicht unbeabsichtigt passieren können, insbesondere zuverlässig von diesem gestoppt oder freigegeben werden können.

Es ist deshalb Aufgabe der Erfindung eine Anordnung einer Vereinzelungseinheit und eines Transportelements bereitzustellen, bei der das Transportelement sicher und zuverlässig vereinzelbar ist.

Eine entsprechendes Anordnung eines Transportelements mit einer Vereinzelungseinheit ist Gegenstand des Anspruchs 1. Vorteilhafte Ausführungsformen sind Gegenstand der abhängigen Ansprüche.

Dementsprechend ist die Erfindung dadurch gekennzeichnet, dass die Vereinzelungseinheit zwei Stößel aufweist, die mit einer mit der Betätigungseinheit gekoppelten Wippe gekoppelt sind und durch die Wippe gegenläufig verfahrbar sein können. Die Wippe kann über eine Schubstange oder ein Pleuel mit dem Stößel gekoppelt sein.

Bevorzugt kann der Vereinzelungsabschnitt eine Abrundung, Einbuchtung und/oder eine Einschnürung aufweisen oder sein. Der Vereinzelungsabschnitt ermöglicht und dient einer erleichterten und verbesserten Vereinzelung des Transportelements. Der Vereinzelungsabschnitt kann derart geformt sein, dass ein Stößel der Vereinzelungseinheit zumindest abschnittsweise formschlüssig den Vereinzelungsabschnitt kontaktieren oder in diesen eingreifen kann. Der Halter kann eine Einhängung aufweisen oder sein. Das Transportelement kann z.B. für einen Hängeförderer, insbesondere einen Taschenförderer, verwendet werden. Der Laufabschnitt kann über den Vereinzelungsabschnitt in den Halteabschnitt übergehen.

Das Transportelement kann zur Verwendung insbesondere für einen Hängeförderer, Gravitationsförderer, Stauförderer, Taschenförderer oder dergleichen eingerichtet sein.

Das Kopfstück und/oder das Koppelstück kann ein magnetisches Material, bevorzugt ein ferromagnetisches Metall, aufweisen, so dass das Transportelement magnetisch mit einem Mitnehmer koppelbar ist. Der Mitnehmer kann mit einem Trum verbunden sein. Damit kann eine Bewegung des Mitnehmers und/oder des Trums über das Koppelstück auf das Transportelement übertragen werden. Der Mitnehmer kann dazu einen Magnet aufweisen, der magnetisch mit dem magnetischen Material des Koppelstücks gekoppelt sein kann. Alternativ oder zusätzlich kann der Mitnehmer mechanisch mit dem Koppelstück und/oder dem Kopfstück gekoppelt sein.

Das Transportelement kann eine Hohlkammer aufweisen, wobei die Hohlkammer im Inneren des Transportelements angeordnet sein kann. Bevorzugt kann die Hohlkammer im Inneren des Halteabschnitts angeordnet sein. Die Hohlkammer kann zur Aufnahme von Funktionselementen dienen. Die Hohlkammer kann eine Einführöffnung und/oder eine Abdeckung aufweisen. Die Abdeckung kann lösbar an der Hohlkammer bzw. dem Transportelement befestigt sein, so dass bei gelöster Abdeckung die Hohlkammer zu einer Umgebung des Transportelements geöffnet sein kann.

Das Transportelement kann ein Identifikationselement aufweisen. Das Identifikationselement kann ein RFID-Chip sein oder aufweisen. Das Identifikationselement kann eindeutige Identifikationsdaten, z.B. des Transportelements oder von dem Transportelement transportierten Gegenständen enthalten, speichern und/oder kommunizieren, z.B. über eine Funkverbindung oder dergleichen. Das Identifikationselement kann in der Hohlkammer angeordnet sein.

Das Transportelement kann zumindest teilweise aus einem Material, das bei einer vorgegebenen Krafteinwirkung, beispielsweise infolge eines Aufpralls des Transportelements, bricht, bestehen oder aufweisen. Bevorzugt kann der Laufabschnitt, der Vereinzelungsabschnitt und/oder der Halteabschnitt das Material aufweisen oder aus einem solchen bestehen. Damit kann bei einem Aufprall, Crash oder Unfall des Transportelements das Fördersystem vor Beschädigungen geschützt sein.

Der Haltabschnitt kann eine Aufweitung mit einer Breite aufweisen, wobei die Breite größer als eine Breite des Laufabschnitts und/oder des Vereinzelungsabschnitts sein kann. Insbesondere wenn das Transportelement um eine Laufachse der Rolle verschwenkbar ist, kann ein Einschwenken eines in ein Transferschienenprofil aufgenommenen Transportelements oder dessen Halteabschnitt in das Transferschienenprofil zumindest teilweise verhindert werden, bzw. dieses nur teilweise in das Transferschienenprofil verschwenken. Das Verhältnis eines Abstands zwischen einer Laufachse der Rolle und der Aufweitung zu dem Durchmesser der Rolle, d/D, kann zwischen 0,6 und 2,5 betragen.

Der Halter kann eine seitliche Verbreiterung und/oder zumindest abschnittsweise eine gerundete Haltefläche aufweisen. Durch die seitliche Verbreiterung kann eine Verdrehung oder ein Pendeln eines in den Halter angehängten oder aufgenommenen Gegenstands, z.B. eines Bügels einer Tragetasche, relativ zu dem Transportelement verhindert oder zumindest entgegengewirkt werden. Durch die zumindest abschnittsweise gerundete Haltefläche kann ein Einhängen oder Aushängen des Gegenstands in bzw. aus dem Halter erleichtert sein oder werden. Die gerundete Haltefläche kann zumindest abschnittsweise einfach gekrümmt oder doppelt gekrümmt sein.

Mindestens eine der Kanten des Laufabschnitt, Vereinzelungsabschnitt und/oder der Halteabschnitt kann eine Abkantung aufweisen. Bevorzugt können die Kanten des Halteabschnitts eine Abkantung aufweisen oder abgekantet sein. Die Abkantung kann z.B. eine Abrundung oder Fase sein oder aufweisen. Damit kann insbesondere bei einem Stauförderer eine verbesserte Kurvenführung der Transportelemente erzielt werden. Durch die Abkantung können Kontaktflächen sich kontaktierender Transportelemente relativ zueinander unter geringerer Reibung verschoben werden bzw. die eine Kontaktfläche über die andere gleiten.

In der Sperrposition kann der Stößel eine Bewegung des Transportelements in einer Transportrichtung sperren, blockieren oder verhindern.

Die Wippe kann über eine Schubstange oder ein Pleuel mit dem Stößel gekoppelt sein.

Der Stößel kann eine an den Vereinzelungsabschnitt angepasste Kontur aufweisen, so dass in der Sperrposition die Kontur den Vereinzelungsabschnitt kontaktiert. Bevorzugt kann die Kontur in der Sperrposition den Vereinzelungsabschnitt formschlüssig kontaktieren. Die Kontur kann abgerundet sein und/oder entlang einer Längsrichtung des Stößels schräg verlaufen.

Die Betätigungseinheit kann einen Drehmagnet aufweisen. Durch den Drehmagnet kann ein großes Drehmoment sehr schnell auf die Wippe übertragen werden, so dass die Stößel sehr schnell verfahrbar sein können.

Die Vereinzelungseinheit kann einen induktiven Sensor aufweisen, der zur Erkennung eines Transportelements eingerichtet sein kann. Die Betätigungseinheit und/oder der Sensor kann mit einer Steuereinheit verbunden sein. Die Steuereinheit kann die Betätigungseinheit ansteuern. Die Steuereinheit kann von dem Sensor Daten empfangen. Die Ansteuerung der Betätigungseinheit durch die Steuereinheit kann unter Berücksichtigung der von dem Sensor gemessenen Daten erfolgen.

Die Erfindung wird anhand der Figuren weiter erläutert. Es zeigen:

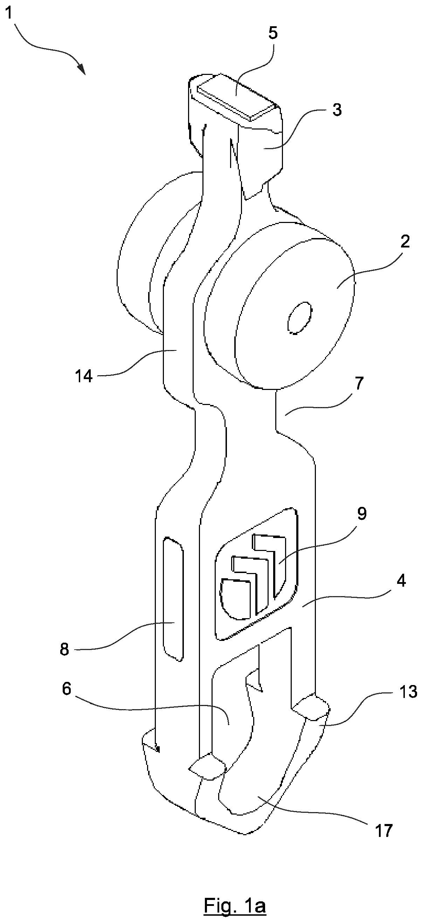

- Fig. 1a:: eine Ausführungsform eines Transportelements in einer perspektivischen Ansicht;

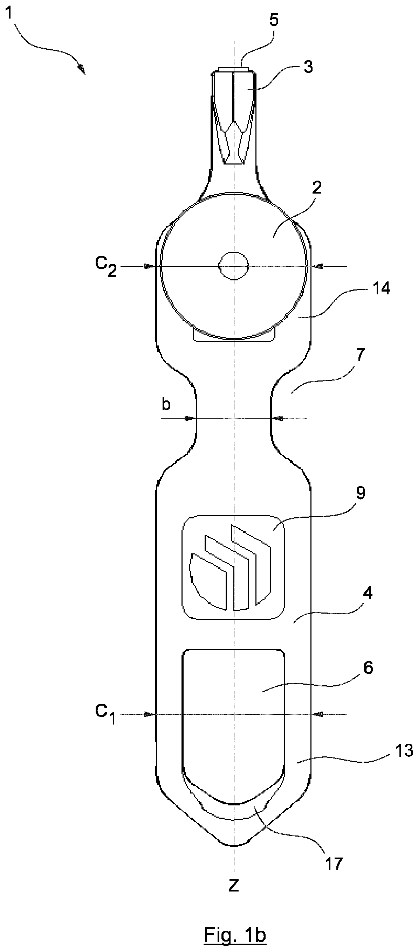

- Fig. 1b:: die in Figur 1a gezeigte Ausführungsform eines Transportelements in einer Seitenansicht;
- Fig. 1b:: die in Figur 1a gezeigte Ausführungsform eines Transportelements in einer weiteren Seitenansicht;
- Fig. 1d:: die in Figur 1a gezeigte Ausführungsform eines Transportelements in einer Draufsicht;
- Fig. 1e:: die in Figur 1a gezeigte Ausführungsform eines Transportelements in einer Schnittansicht;
- Fig. 1f:: die in Figur 1a gezeigte Ausführungsform eines Transportelements aufgenommen in einem Transportschienenprofil;
- Fig. 2a:: eine weitere Ausführungsform eines Transportelements in einer Seitenansicht;
- Fig. 2b:: die in Figur 2a gezeigte Ausführungsform eines Transportelements in einer weiteren Seitenansicht;
- Fig. 2c:: die in Figur 2a gezeigte Ausführungsform eines Transportelements in einer Draufsicht;
- Fig. 2d:: die in Figur 2a gezeigte Ausführungsform eines Transportelements in einer Schnittansicht;
- Fig. 3:: eine Anordnung einer erfindungsgemäßen Ausführungsform eines Transportelements und einer Vereinzelungseinheit;
- Fig. 4a:: eine erfindungsgemäße Anordnung der in Fig. 1a gezeigten Ausführungsform eines Transportelements und einer Vereinzelungseinheit in einer Draufsicht;
- Fig. 4b:: eine erfindungsgemäße Anordnung der in Fig. 1a gezeigten Ausführungsform eines Transportelements und einer Vereinzelungseinheit in einer Draufsicht;
- Fig. 5:: eine erfindungsgemäße Anordnung der in Fig. 2a gezeigten Ausführungsform eines Transportelements und einer Vereinzelungseinheit in einer Draufsicht;

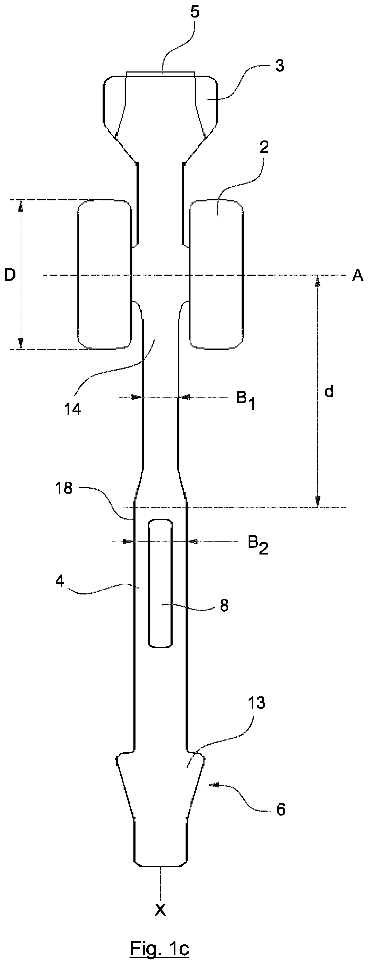

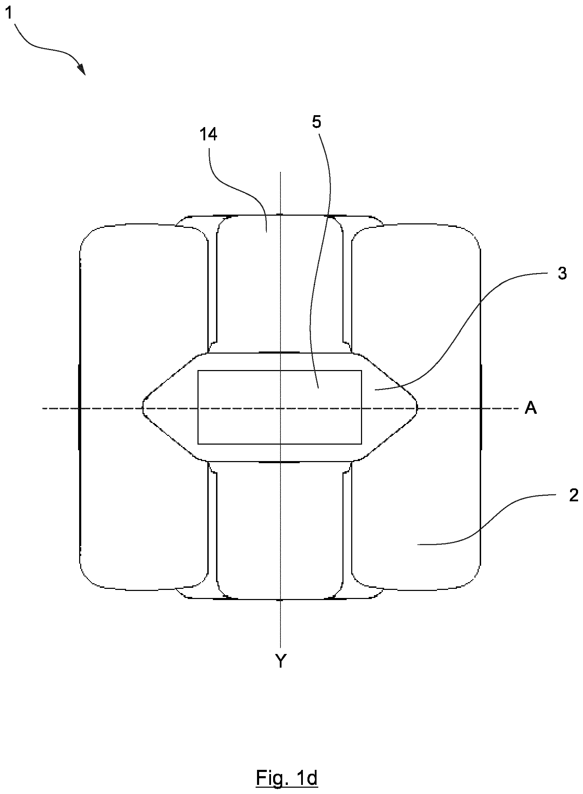

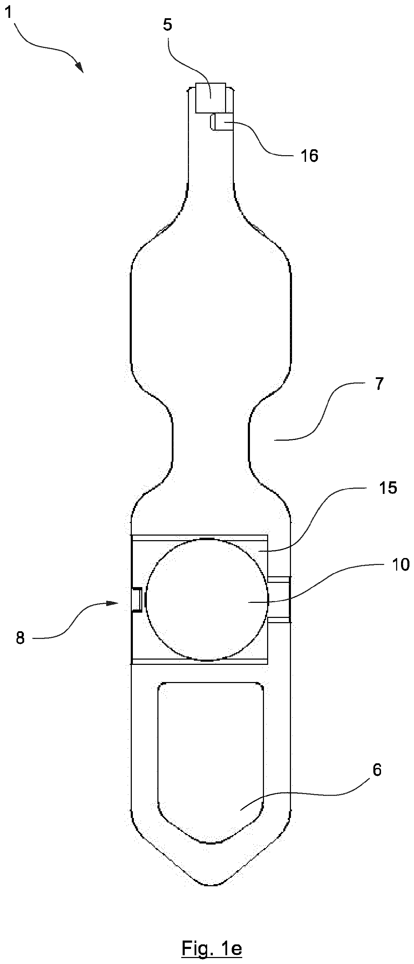

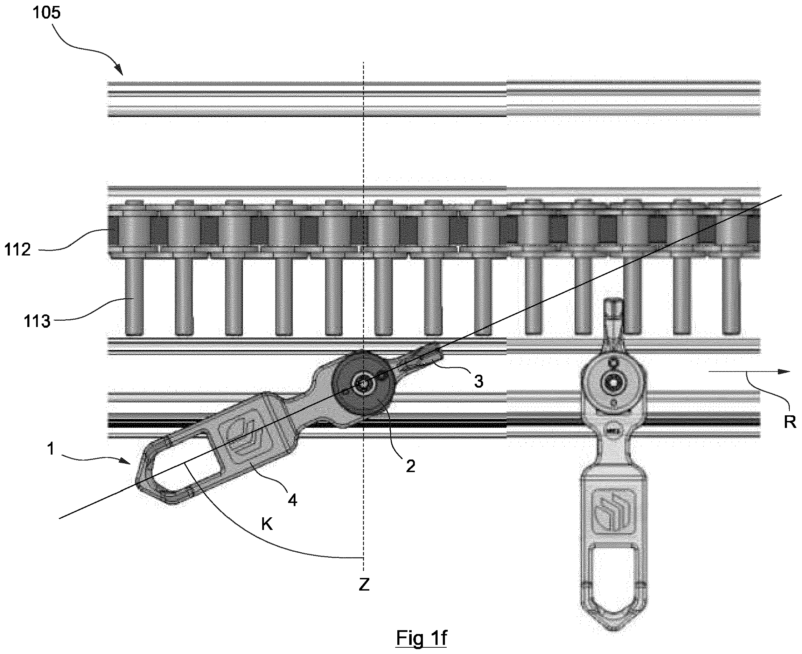

Ein erstes Ausführungsbeispiel eines Transportelements 1 ist in den Figuren 1a bis 1e gezeigt, wobei in Figur 1a eine perspektivische Ansicht, in den Figuren 1b und 1c seitliche Ansichten, in der Figur 1d eine Draufsicht und in Figur 1e eine Schnittansicht gezeigt ist. Figur 1f zeigt ein in ein Transportschienenprofil aufgenommenes Transportelement. Das Transportelement 1 weist einen Laufabschnitt 14 mit mindestens einer Rolle 2, ein Kopfstück 3 und einen Halteabschnitt 4 auf. Das Transportelement 1 kann zwei Rollen 2 aufweisen, die eine gemeinsame Laufachse A haben können. Die beiden Rollen 2 können dabei wie in den Figuren gezeigt auf der Laufachse A an jeweils gegenüberliegenden Außenseiten des Transportelements 1 bzw. des Laufabschnitts 14 angeordnet sein. Das Transportelement 1, der Halteabschnitt 4 und/oder das Kopfstück 3 kann um die Laufachse A drehbar bzw. verschwenkbar sein, relativ zu der Rolle 2.

Das Kopfstück 3 weist ein Koppelstück 5 auf. Über das Koppelstück 5 kann das Transportelement 1 mit einem nicht in den Figuren 1a bis 1e gezeigten Mitnehmer eines Trums gekoppelt werden, so dass das Transportelement 1 über die Kopplung von dem Trum bewegt werden kann. Das Koppelstück 5 kann aus einem ferromagnetischen Material, z.B. einem ferromagnetischen Metall, bestehen oder ein solches aufweisen. In diesem Falle kann das Transportelement 1 magnetisch mit einem entsprechenden magnetischen Mitnehmer des Trums gekoppelt sein oder werden. Alternativ oder zusätzlich kann das Kopfstück 3 und/oder das Koppelstück 5 mechanisch mit einem Mitnehmer des Trums gekoppelt sein. Das Transportelement 1 kann eine Bohrung 16 aufweisen. Die Bohrung 16 kann unterhalb des Koppelstücks 5 angeordnet sein. Die Bohrung 16 kann dazu dienen, ein Austauschen des Koppelstücks 5, z.B. des ferromagnetischen Materials des Koppelstücks, zu erleichtern. So kann beispielsweise vorgesehen sein, mittels eines in die Bohrung 16 eingeführten Schraubenziehers das ferromagnetische Material 5 aus dem Kopfstück 3 zu entfernen oder herauszuheben.

Der Halteabschnitt 4 weist einen Halter 6 auf. Der Halter 6 kann dazu eingerichtet sein, einen zu transportierenden Gegenstand zu halten oder an dem Transportelement 1 zu befestigen. Beispielsweise kann der Halter 6 eine Einhängung sein oder aufweisen. Wird das Transportelement 1 für einen Taschenförderer verwendet, so kann beispielsweise eine Transporttasche in den Halter 6 eingehängt sein oder werden. Der Halter 6 kann eine seitliche Verbreiterung 13 aufweisen. Die seitliche Verbreiterung 13 kann z.B. dazu dienen, dass in den Halter 6 eingehängt Gegenstände, z.B. Transporttaschen, bei einer Beschleunigung oder Abbremsung des Transportelement 1 weniger verschwenkt werden bzw. weniger pendeln. Die seitliche Verbreiterung 13 kann beispielsweise derart geformt sein, dass sie formschlüssig einen in den Halter 6 eingehängten Haltebügel, z.B. einer Transporttasche, oder einem sonstigen eingehängten Gegenstand kontaktiert. Durch die Verbreiterung und/oder den Formschluss kann die seitliche Verbreiterung einer Drehung des Haltebügels bzw. des eingehängten Gegenstands relativ zu dem Transportelement 1 entgegenwirken oder verhindern. Der Halter 6 kann zumindest abschnittsweise eine gerundete Haltefläche 17 aufweisen. Die gerundete Haltefläche 17 kann zumindest abschnittsweise einfach oder doppelt gekrümmt sein. Durch die gerundete Haltefläche 17 kann das z.B. Einhängen und/oder Aushängen eines Gegenstands, z.B. einer Tragetasche, in den Halter 6 erleichtert sein oder werden.

Der Laufabschnitt 14 geht über einen Vereinzelungsabschnitt 7 in den Halteabschnitt 4 über. Der Vereinzelungsabschnitt 7 kann eine Abrundung, eine Einbuchtung und/oder eine Einschnürung oder dergleichen aufweisen. Eine Breite b des Vereinzelungsabschnitts 7 kann beispielsweise kleiner als eine Breite C1 des Halteabschnitts 4 und/oder eine Breite C2 des Laufabschnitts 4 sein. Der Vereinzelungsabschnitt 7 kann dazu eingerichtet sein, einen Stößel einer Vereinzelungseinheit aufzunehmen und/oder von diesem kontaktiert zu sein oder werden. Damit kann das Transportelement 1 zuverlässig von der Vereinzelungseinheit gestoppt bzw. aufgehalten werden. Der Vereinzelungsabschnitt 7 kann abgerundet sein, so dass der Stößel sicher und zuverlässig in den Vereinzelungsabschnitt 7 geführt sein oder werden kann. Es kann zudem vorgesehen sein, dass der Vereinzelungsabschnitt 7, und/oder die Abrundung, Einbuchtung und/oder Einschnürung, an die Form des Stößels bzw. der Stößel an die Form des Vereinzelungsabschnitt 7 angepasst sein kann. Bei Eingriff des Stößels in den Vereinzelungsabschnitt 7 und/oder in den Vereinzelungsabschnitt 7 eingegriffenem Stößel kann durch den Vereinzelungsabschnitt 7 eine Verschwenkung oder Pendelbewegung des Transportelements 1 um die Laufachse A reduziert oder verhindert sein oder werden.

Mindestens eine Kante des Laufabschnitts 14, Vereinzelungsabschnitts 7 und/oder Halteabschnitts 4 kann eine Abkantung 19 aufweisen. Es können z.B. alle Kanten des Halteabschnitts 4 eine Abkantung 19 aufweisen oder abgekantet sein. Insbesondere Eckkanten bzw. Außenkanten können eine Abkantung 19 aufweisen oder abgekantet sein. Die Abkantung kann eine Fase oder Abrundung aufweisen bzw. abgerundet sein. Die die Abrundung 19 aufweisenden Kanten können symmetrisch bzgl. der Symmetrieachse X angeordnet sein. Durch die Abkantung kann Reibung zwischen zwei sich kontaktierenden Transportelementen 1 verringert werden, wenn die jeweiligen Kontaktflächen relativ zueinander verschoben werden bzw. gleiten. Damit kann z.B. eine Kurvenführung zweier sich kontaktierender Transportelemente 1 verbessert werden.

Das Transportelement 1 kann wie in der in Figur 1e gezeigten Schnittansicht eine Hohlkammer 15 aufweisen. Die Hohlkammer 15 kann in dem Halteabschnitt 4 angeordnet sein. Über eine Einführungsöffnung 8 kann die Hohlkammer 15 zu der Umgebung des Transportelement 1 offen sein. Damit kann durch die Einführöffnung 8 z.B. ein Funktionselement in die Hohlkammer 15 eingesetzt oder entnommen werden. Das Funktionselement kann beispielsweise ein Identifikationselement 10 sein oder aufweisen, mit dem das Transportelement 1 eindeutig identifizierbar sein kann. Das Identifikationselement 10 kann beispielsweise ein RFID-Chip 10 sein oder aufweisen. Der RFID-Chip 10 kann beispielsweise Informationen über den von dem Transportelement 1 transportierenden Gegenstand und/oder einen Identifikationscode enthalten, aufweisen und/oder aussenden. Alternativ oder zusätzlich kann der Hohlraum 15 auch über eine Abdeckung 9 geöffnet oder freigelegt werden. Die Abdeckung 9 kann lösbar an einer Außenseite des Transportelement 1 befestigt sein.

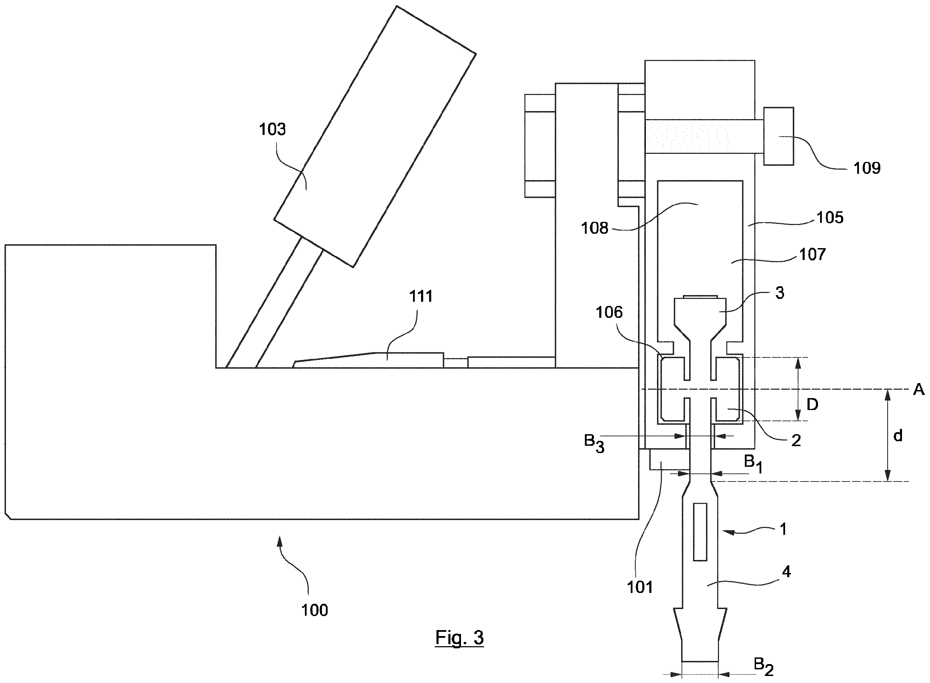

Wie in Figur 1 gezeigt kann das Transportelement 1 eine Aufweitung 18 aufweisen. Insbesondere kann der Halteabschnitt 4 die Aufweitung 18 aufweisen. Die Aufweitung 18 kann eine Breite B2 aufweisen, die größer als eine Breite B1 des Laufabschnitts 14 und/oder des Vereinzelungsabschnitt 7 sein kann. Die Aufweitung 18 kann unter einem Abstand d in Richtung des Halteabschnitts 4 von der Laufachse A der Rolle 2 angeordnet sein. Die Breite B2 kann derart gewählt sein, dass der Halteabschnitt 4 eines in ein Transferschienenprofil 105 bzw. eine Transferschiene aufgenommenen Transportelement 1 nicht vollständig, nur teilweise oder gar nicht einschwenken kann. Es kann insbesondere vorgesehen sein, dass die Breite B1 kleiner als eine Breite B3 einer Öffnung des Transferschienenprofils 105 und die Breite B2 größer als die Breite B3 ist, vgl. Figur 3a. Damit kann durch die Aufweitung 18 auch ein maximaler Kippwinkel eines in das Transferschienenprofil 105 aufgenommenen Transportelement 1 definiert sein. Das Verhältnis des Abstands d zu dem Durchmesser D der Rolle 2, d/D, ist dabei größer als d/D = 0,5. Je größer das Verhältnis d/D, desto größer ist auch der maximale Kippwinkel K, gemessen als Verschwenkung des Transportelement 1 relativ zu der Kippachse Z. Der Kippwinkel K des in Figur 1b gezeigten Transportelement 1 beträgt beispielsweise 0°. Ist das Transferschienenprofil 105 ein Hohlprofil mit vernachläßigbarer Wanddicke, so kann sich der maximale Kippwinkel K eines in das Transferschienenprofil 105 aufgenommenen Transportelements 1 zu K = arccos(0,5 * D/d) ergeben. Bevorzugt ist ein Verhältnis d/D = 0,6 bis d/D = 2,5. Ein um die Laufachse A um einen Kippwinkel K verschwenktes Transportelement 1 ist beispielsweise in Figur 1f gezeigt. In Figur 1f ist zudem beispielhaft ein in ein Transferschienenprofil 105 aufgenommener Trum 112 mit Mitnehmer 113 gezeigt. Mitnehmer 113 und Kopfteil 3 können z.B. mechanisch gekoppelt sein.

Das Transportelement 1 kann symmetrisch bezüglich einer Symmetrieachse X und/oder einer Symmetrieachse Y sein. Das Transportelement 1 kann zumindest teilweise aus einem Material, das bei einer vorgegebenen Krafteinwirkung bricht, bestehen oder ein solches aufweisen. Bevorzugt kann der Laufabschnitt 14, der Vereinzelungsabschnitt 7 und/oder der Halteabschnitt 4 das Material aufweisen oder aus einem solchen bestehen. Das Material kann beispielsweise derart gewählt sein, dass es unter Krafteinwirkung einer für einen Zusammenstoß, Aufprall oder Unfall des Transportelements bei einer bestimmten Geschwindigkeit charakteristischen Kraft bricht. Damit kann eine Beschädigung des Fördersystems bzw. dessen Komponenten aufgrund des Zusammenstoßes, Aufpralls oder Unfalls verhindert werden. Das Material kann z.B. ein Kunststoff sein oder einen solchen aufweisen.

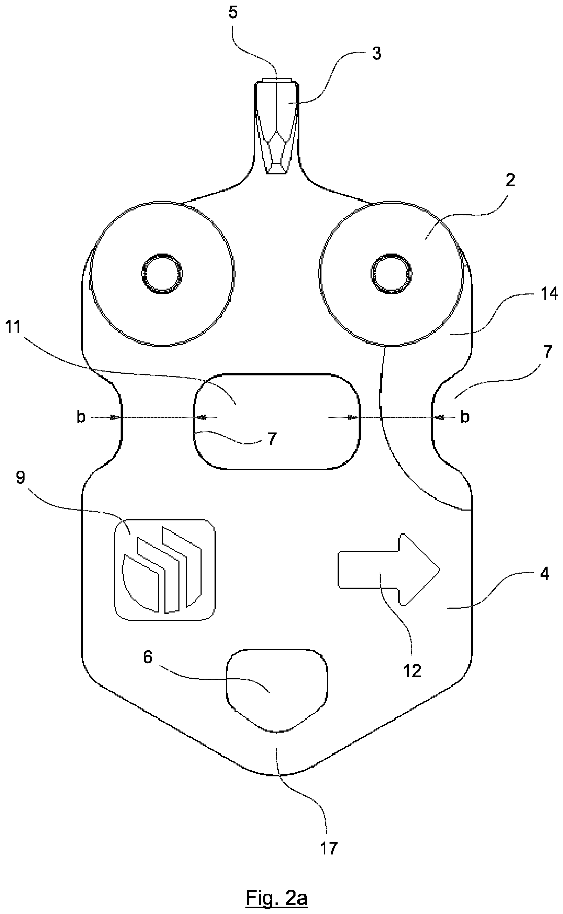

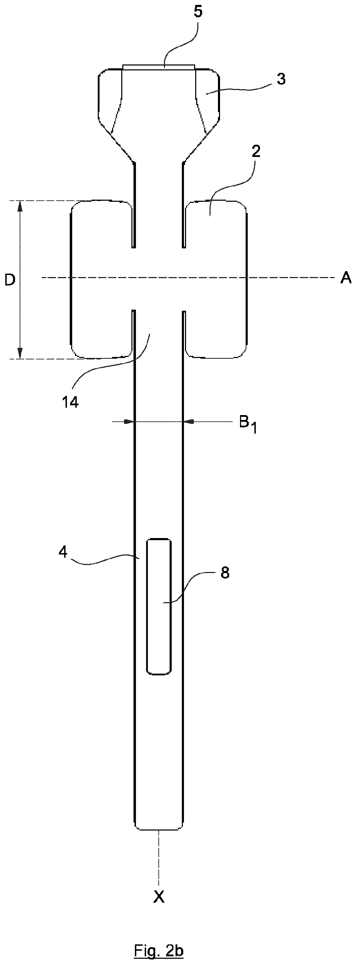

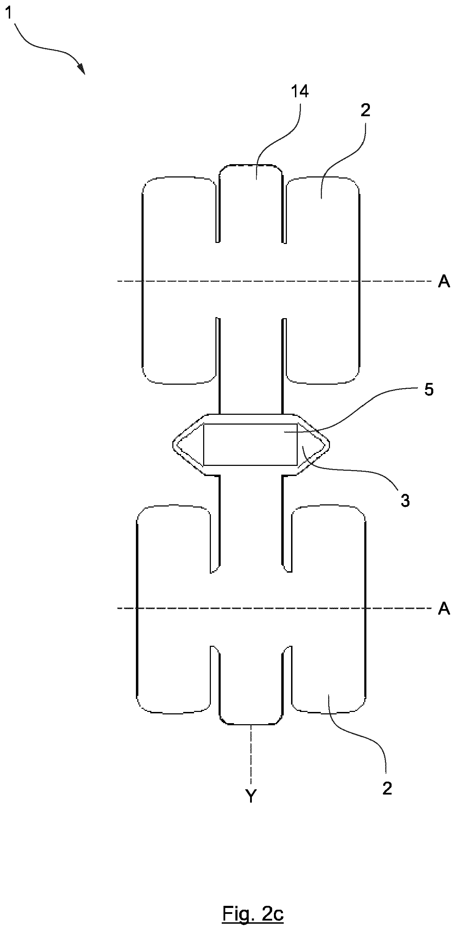

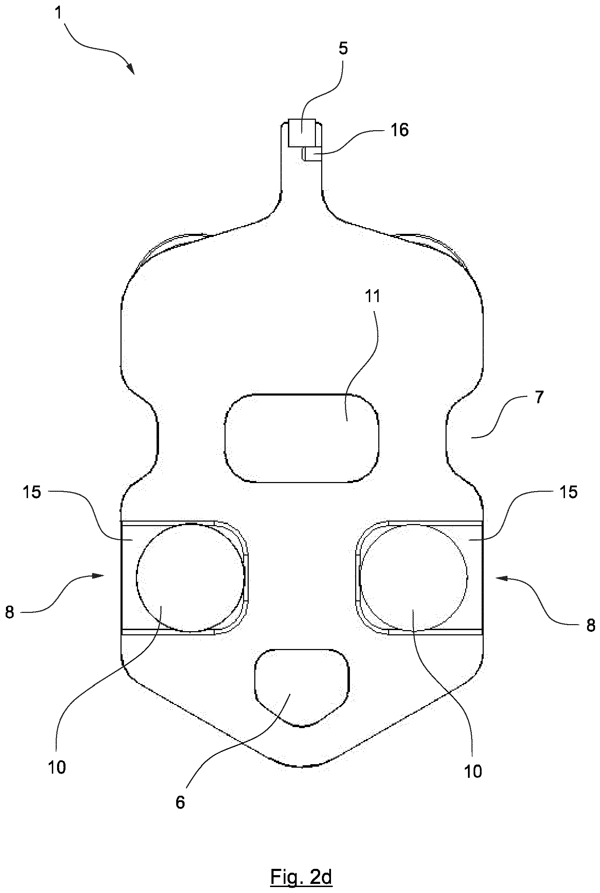

Eine weitere beispielhafte Ausführungsform eines Transportelement 1 ist in den Figuren 2a bis 2d gezeigt. Figuren 2a und 2b zeigen eine seitliche Ansicht, Figur 2c eine Draufsicht und Figur 2d eine Schnittansicht. Das in den Figuren 2a bis 2d gezeigte Ausführungsbeispiel kann einige, mehrere oder alle Merkmale des mit Bezug zu den Figuren 1a bis 1f beschriebenen Ausführungsbeispiels aufweisen, so dass auf die obige Beschreibung der Figuren 1a bis 1f verwiesen wird. Das in den Figuren 2a bis 2d gezeigte Transportelement 1 kann vier Rollen 2 aufweisen. Je zwei der Rollen 2 können auf der gleichen Laufachse A der Rollen angeordnet sein. Die auf der gleichen Laufachse A angeordneten Rollen können an jeweils gegenüberliegenden Seiten des Transportelements 1 angeordnet sein. Das Transportelement 1 kann dazu eingerichtet sein, schwere Gegenstände zu transportieren. Die vier Rollen 2 können dabei das Gewicht des zu transportierenden schweren Gegenstands vorteilhaft aufnehmen und verteilen.

Das Transportelement 1 kann wie in Figur 2d gezeigt zwei Hohlkammern 15 aufweisen, die im Inneren des Transportelement 1, bevorzugt im Inneren des Halteabschnitts 4 angeordnet sein können. Es kann vorgesehen sein, dass jede der Hohlkammern 15 eine separate Einführöffnung 8 aufweist.

Das Transportprofil 1 kann eine Aussparung 11 aufweisen. Die Aussparung 11 kann im Bereich des Übergangs von Laufabschnitt 14 zu Halteabschnitt 4, z.B. im Bereich des Vereinzelungsabschnitts 7, angeordnet sein. Die Aussparung 11 kann einen oder zwei weitere Vereinzelungsabschnitte 7 aufweisen oder bilden, wie z.B. in Figur 2b gezeigt. Es kann vorgesehen sein, dass mindestens einer oder alle Vereinzelungsabschnitte 7 an der Aussparung 11 angeordnet oder von dieser gebildet sind, bevorzugt an oder durch Innenseiten der Aussparung 11.

Es kann vorgesehen sein, dass das in den Figuren 2a bis 2d gezeigte Ausführungsbeispiel keine Aufweitung 18 aufweist. Durch die vier Rollen 2 bzw. die zwei Laufachsen A kann ein Verkippen oder Verschwenken des Transportelements 1, bzw. des Halteelements 4, entgegengewirkt oder verhindert werden. Es kann vorgesehen sein, dass Laufabschnitt 14, Vereinzelungsabschnitt 7 und Halteabschnitt 4 die gleiche Breite B1 aufweisen.

Das Transportelement 1 kann eine Markierung 12 aufweisen. Die Markierung 12 kann beispielsweise eine Transportrichtung anzeigen, und/oder Informationen über einen transportierten Gegenstand oder Identifikationsdaten des Transportprofils 1 enthalten oder darstellen.

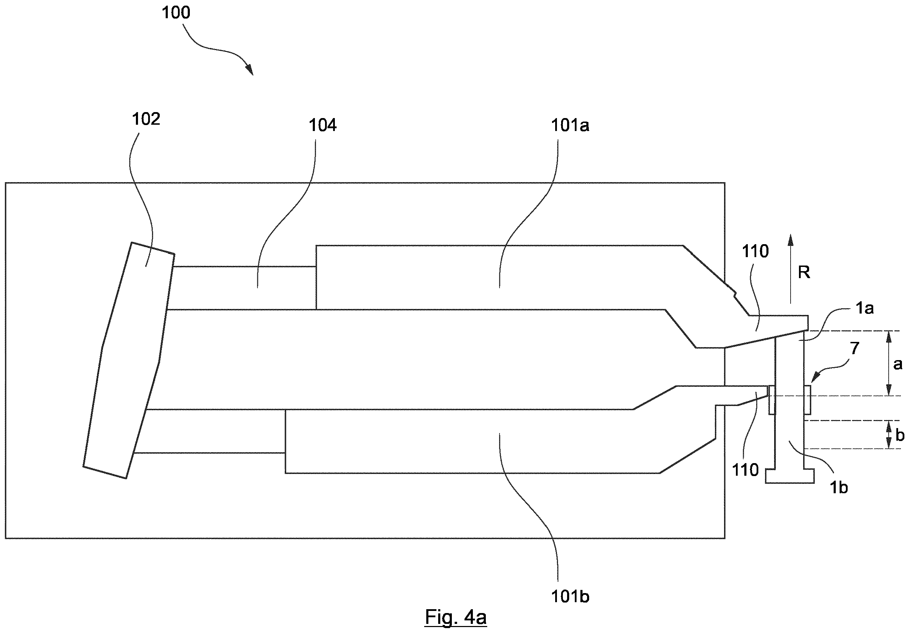

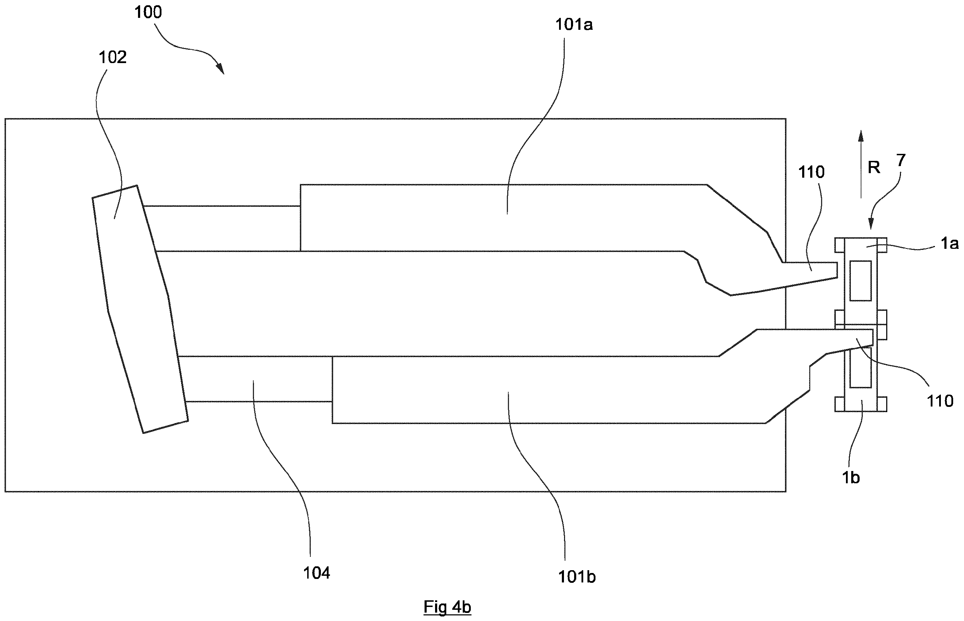

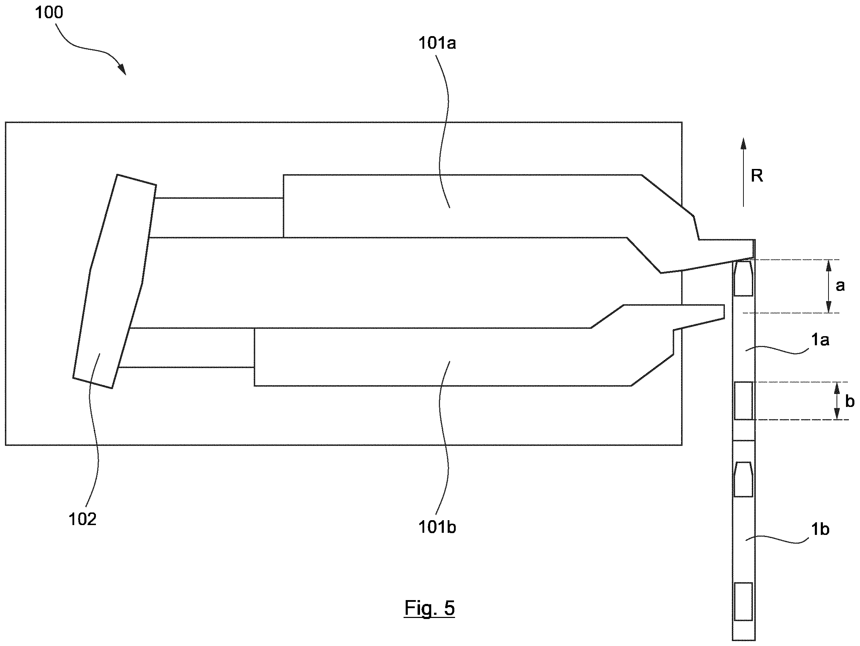

Eine Anordnung eines Transportelements 1 und einer Vereinzelungseinheit 100 ist in Figur 3 gezeigt. Das Transportelement 1 kann in einem Transferschienenprofil 105 aufgenommen sein. Ausführungsformen der Vereinzelungseinheit sind mit Bezug zu den Figuren 4a, 4b und 5 weiter beschrieben. Die Vereinzelungseinheit 100 kann mit dem Transferschienenprofil 105 verbunden sein, beispielsweise über ein geeignetes Montageelement 109. Das Transferschienenprofil 105 kann eine erste Hohlkammer 108 zur Aufnahme eines nicht in Figur 3 gezeigten Trums aufweisen. Das Transferschienenprofil 105 kann eine unterhalb der ersten Hohlkammer 108 angeordnete und zu dieser geöffnete zweite Hohlkammer 107 aufweisen. Die zweite Hohlkammer 107 kann der Aufnahme eines mit dem Trum verbundener Mitnehmers sowie des Kopfstücks 3 des Transportelements 1 dienen. Das Transferschienenprofil 105 kann eine dritte Hohlkammer 106 aufweisen, die unterhalb der zweiten Hohlkammer 107 angeordnet und zu dieser geöffnet sein kann. Die dritte Hohlkammer 106 kann an einem unteren Ende des Transferschienenprofils 1 zu der Umgebung geöffnet sein. Die Öffnung kann eine Breite B3 haben. Ist ein Transportelement 1 in dem Transferschienenprofil 1 wie in Figur 3 gezeigt aufgenommen, so kann das Kopfstück 3 in der zweiten Hohlkammer 107 und der Laufabschnitt 14 und die Rollen 2 in der dritten Hohlkammer 106 angeordnet sein. Das Transportelement 1 kann sich durch die Öffnung der dritten Hohlkammer 106 nach außen und/oder wie in Figur 3 gezeigt nach unten erstrecken, so dass der Halterabschnitt 4 und der Vereinzelungsabschnitt 7 außerhalb des Transferschienenprofils 105 angeordnet sind.

Die Vereinzelungseinheit 100 weist mindestens einen Stößel 101 auf. Der Stößel 101 und der Vereinzelungsabschnitt 7 können derart angeordnet sein, dass sie bei mit dem Transferschienenprofil 105 montierten Vereinzelungseinheit 100 und in das Transferschienenprofil 105 aufgenommenem Transportelement 1 in einer gemeinsamen Ebene liegen, bevorzugt in einer im Wesentlichen horizontalen Ebene und/oder parallel zueinander angeordnet sind. Die Vereinzelungseinheit 100 weist eine Betätigungseinheit 103 auf, mit der der Stößel 101 zwischen einer Sperrposition und einer Freigabeposition verfahrbar ist. Die Betätigungseinheit 103 kann ein Drehmagnet sein oder aufweisen. In der Sperrposition ist der Stößel derart verfahren, dass er den Vereinzelungsabschnitt 7 des Transportelement 1 kontaktieren und damit eine Bewegung des Transportelement 1 sperren oder blockieren kann. In der Freigabeposition ist der Stößel 101 derart verfahren bzw. zurückgezogen, dass er den Vereinzelungsabschnitt 7 des Transportelement 1 nicht kontaktieren kann.

Die Vereinzelungseinheit 100 kann einen Sensor 111, z.B. einen induktiven Sensor 111, aufweisen. Mit dem Sensor 111 kann ein Transportelement 1 erkannt und/oder detektiert werden. Die Betätigungseinheit 103 und/oder der Sensor 111 kann mit einer (nicht gezeigten) Steuereinheit verbunden sein. Die Steuereinheit kann die Betätigungseinheit 103 ansteuern und/oder Daten von dem Sensor 111 empfangen. Es kann vorgesehen sein, dass die Steuereinheit die Betätigungseinheit 103 unter Berücksichtigung von von dem Sensor 111 empfangenen Daten ansteuert, z.B. unter Berücksichtigung von Näherungsdaten oder Positionsdaten des Transportelements 1.

Die Figuren 4a und 4b zeigen eine erfindungsgemäße Anordnung der in den Figuren 1 a bis 1f gezeigten Ausführungsform eines Transportelements 1 und einer Vereinzelungseinheit 100. Die Figur 5 zeigt eine erfindungsgemäße Anordnung der in den Figuren 2a bis 2d gezeigten Ausführungsform eines Transportelements 1 und einer Vereinzelungseinheit 100.

Die Vereinzelungseinheit 100 weist zwei Stößel 101a, 101b auf. Die Vereinzelungseinheit 100 weist eine Wippe 102 auf, die mit der Betätigungseinheit 103 gekoppelt ist. Die Wippe 102 ist mit dem Stößel 101 gekoppelt, beispielsweise über eine Schubstange 104 oder ein Pleuel. Durch Betätigung der Wippe 102 können die Stößel 101a, 101b gegenläufig verfahren werden.

Die Vereinzelung wird nachfolgend anhand der Figuren 4a und 4b bzw. 5 beschrieben. In Figur 4a bzw. 5 ist die Wippe 102 derart von dem Betätigungselement 103 betätigt worden, dass sich der erste Stößel 101a in einer Sperrposition und der zweite Stößel 101b in einer Freigabeposition befindet. In Fig. 4a und 5 ist eine Bewegung des Transportelement 1a in Transportrichtung R durch den Stößel 101a gesperrt. Damit ist auch eine Bewegung des nachfolgenden Transportelement 1b in Transportrichtung R durch das gesperrte Transportelement 1a und damit den Stößel 101a gesperrt, obwohl sich der Stößel 101b in der Freigabeposition befindet.

Die Wippe 102 kann anschließend durch die Betätigungseinheit derart betätigt werden, dass der Stößel 101a in die Freigabeposition und der Stößel 101b in die Sperrposition überführt wird, vgl. Fig. 4b. Damit ist das Transportelement 1a freigegeben und kann in Transportrichtung R bewegt werden, z.B. durch einen Trum, einen Mitnehmer und/oder unter Einfluss der Schwerkraft, wobei das nachfolgende Transportelement 1b durch den Stößel 101b gesperrt ist. Nach einer weiteren Betätigung der Wippe 102 durch die Betätigungseinheit 103 ergibt sich wiederum der in Figur 4a gezeigte Zustand, in dem das nachfolgende Transportelement 1b dem Transportelement 1a der Figur 4a entspricht. Somit kann ein in den Figuren 1a bis 1f gezeigtes Transportelement 1 durch eine zweifache Betätigung der Wippe 102 vereinzelt werden. Die Wippe 102 kann dazu durch das Betätigungselement 103 zuerst in eine Richtung, und anschließend in eine entgegengesetzte Richtung gedreht werden. Die Vereinzelungseinheit kann ein entsprechendes Transportelement eintaktig vereinzeln. Eine eintaktige Vereinzelung kann eine Hin- und Zurückbewegung der Wippe umfassen, so dass ein Stößel aus einer Sperrposition in eine Freigabeposition und anschließend von der Freigabeposition in die Sperrposition verfahren wird, oder umgekehrt. Eine zweitaktige Vereinzelung kann zwei eintaktige Vereinzelngen bzw. Vereinzelungsschritte umfassen.

Es kann vorgesehen sein, dass nach Betätigen der Wippe 102 durch die Betätigungseinheit 103 das in den Figuren 2a bis 2d gezeigte Transportelement 1a (noch) nicht in Transportrichtung R bewegbar ist oder wird, sondern von dem Stößel 101b gesperrt ist bzw. wird. Nach einer weiteren Betätigung der Wippe 102 befindet der Stößel 101a in der Sperrposition und der Stößel 101b in der Freigabeposition. Es kann dabei vorgesehen sein, dass das Transportelement 1a (immer noch bzw. wieder) durch den Stößel 101a gesperrt wird, der nun allerdings einen zweiten Vereinzelungsabschnitt 7 kontaktieren kann, (z.B. bei b in Figur 5, vgl. auch die zwei Vereinzelungsabschnitte 7 der Figuren 2a bis 2d). Nach einer noch weiteren Betätigung der Wippe 102 befindet sich der Stößel 101a wiederum in der Freigabeposition und der Stößel 101b in der Sperrposition. Damit kann nun das Transportelement 1a in Transportrichtung R bewegt werden, wobei das Transportelement 1b durch den Stößel 101b gesperrt ist. Nach einer weiteren Betätigung der Wippe 102 durch die Betätigungseinheit 103 ergibt sich wiederum der in Figur 5 gezeigte Zustand, in dem das nachfolgende Transportelement 1b dem Transportelement 1a der Figur 5 entspricht. Somit kann ein in den Figuren 2a bis 2d gezeigtes Transportelement 1 durch eine vierfache Betätigung der Wippe 102 vereinzelt werden. Die Wippe 102 kann dazu durch das Betätigungselement 103 je zweimal zuerst in eine Richtung, und anschließend in eine entgegengesetzte Richtung gedreht werden. Die Vereinzelungseinheit kann ein entsprechendes Transportelement zweitaktig vereinzeln.

Die Vereinzelungseinheit 100 kann dazu eingerichtet und entsprechend angesteuert sein, dass sie sowohl die in den Figuren 1a bis 1f als auch die in den Figuren 2a bis 2d gezeigten beispielhaften Ausführungsformen eines Transportelement 1 vereinzeln kann. Damit können in einem Fördersystem die beiden Ausführungsformen beliebig verwendet werden. Es kann vorgesehen sein, den Abstand a entsprechend zu wählen.

Vorteilhafterweise kann die Betätigungseinheit 103 einen Drehmagneten aufweisen. Damit kann auf die Wippe 102 sehr rasch ein großes Drehmoments aufgeprägt werden, so dass der Stößel 101 sehr schnell verfahrbar ist. Es kann vorgesehen sein, dass die Geschwindigkeit, mit der der Stößel 101 verfahrbar ist und/oder verfahren wird, größer als, insbesondere deutlich größer als, die Geschwindigkeit eines Trums, Mitnehmers und/oder eines freigegebenen Transportelement 1 in Transportrichtung R ist.

Der Abstand a zwischen den Stößeln 101a, 101b kann größer als die Breite b des Vereinzelungsabschnitts 7 des Transportelements 1 sein. Der Abstand a kann im Wesentlichen einem Vielfachen der Breite b entsprechen. Damit kann die Vereinzelungseinheit Transportelemente 1 sicher und zuverlässig vereinzeln, insbesondere bei hoher Geschwindigkeit der Stößel. In einer Ausführungsform kann der Abstand a derart gewählt sein, dass die in Figur 2a bis 2d gezeigte Ausführungsform eines Transportelements 1 schon durch zweifache Betätigung der Wippe bzw. eintaktig vereinzeln kann. Die Vorschubgeschwindigkeit der Stößel kann ggf. dazu geeignet gewählt sein. Alternativ oder zusätzlich können die Vereinzelungseinheit 100 und/oder der oder die Stößel 101a, 101b derart geformt, angeordnet oder beabstandet sein, dass in einer neutralen Position der Wippe einer, mehrere oder alle Stößel 101a, 101b ein Transportelement 1 freigeben und/oder nicht in den Vereinzelungsabschnitt 7 eingreifen oder diesen kontaktieren können. Beispielsweise kann die Vereinzelungseinheit 1 der Fig. 4a, 4b und 5 geeignet von der nicht in den Figuren gezeigten Transportschienenprofil 105 beabstandet sein. Damit kann die Vereinzelungseinheit 100 Transportelemente 1 mit beliebiger Anzahl Vereinzelungsabschnitten 7 einfach und unkompliziert eintaktik oder mehrtaktik vereinzeln. Die Vereinzelungseinheit 100 kann dazu geeignet angesteuert werden.

Der Stößel 101 kann eine Kontur 110 aufweisen. Die Kontur 110 ist bevorzugt an, bei oder im Bereich des Endes des Stößels 101 angeordnet, dass den Vereinzelungsabschnitt 7 des Transportelement 1 kontaktieren kann. Die Kontur 110 kann derart geformt sein, dass sie in der Sperrposition des Stößels 101 zumindest abschnittsweise formschlüssig den Vereinzelungsabschnitt 7 kontaktieren oder in den Vereinzelungsabschnitt 7 eingreifen kann. Die Kontur 110 kann beispielsweise entsprechend der Form des Vereinzelungsabschnitts 7 ausgeführt oder geformt sein oder einer eine komplementäre Form aufweisen. Die Kontur 110 kann beispielsweise abgerundet sein und/oder entlang einer Längsrichtung des Stößels 110 verlaufen, vgl. z.B. Fig. 4a, 4b und 5. Damit kann sich eine besonders gute und sichere Sperrwirkung des Stößels ergeben.

### Bezugszeichenliste:

- 1: Transportelement
- 2: Rolle
- 3: Kopfstück
- 4: Halteabschnitt
- 5: Koppelstück
- 6: Halter
- 7: Vereinzelungsabschnitt
- 8: Einführöffnung
- 9: Abdeckung
- 10: Identifikationselement
- 11: Aussparung
- 12: Markierung
- 13: Verbreiterung
- 14: Laufabschnitt
- 15: Hohlkammer
- 16: Bohrung
- 17: Haltefläche
- 18: Aufweitung
- 19: Abkantung
- 100: Vereinzelungseinheit
- 101: Stößel
- 102: Wippe
- 103: Betätigungseinheit
- 104: Schubstange
- 105: Transferschienenprofil
- 106: dritte Hohlkammer
- 107: zweite Hohlkammer
- 108: erste Hohlkammer
- 109: Montageelement
- 110: Kontur
- 111: Sensor
- a: Abstand
- A: Laufachse
- b: Breite
- B1: Breite
- B2: Breite
- B3: Breite
- C1: Breite
- C2: Breite
- d: Abstand
- D: Durchmesser
- K: Kippwinkel
- R: Transportrichtung
- X: Symmetrieachse
- Y: Symmetrieachse
- Z: Kippachse

## Patentansprüche

1. Anordnung einer Vereinzelungseinheit (100) und eines Transportelements (1), wobei das Transportelement (1) einen Laufabschnitt (14) mit mindestens einer Rolle (2), ein Kopfstück (3) mit einem Koppelstück (5) zur Kopplung mit einem Mitnehmer, und einen Halteabschnitt (4) mit einem Halter (6) aufweist, wobei das Transportelement (1) einen Vereinzelungsabschnitt (7), aufweist, wobei die Vereinzelungseinheit (100) mindestens einen Stößel (101) aufweist, der mit einer Betätigungseinheit (103) gekoppelt ist, wobei der Stößel dazu eingerichtet ist, zwischen einer Sperrposition, in der das Transportelement (1) gesperrt ist, und einer Freigabeposition, in der das Transportelement (1) freigegeben ist, von der Betätigungseinheit (103) verfahren zu werden, wobei in der Sperrposition der Stößel (101) den Vereinzelungsabschnitt (7) des Transportelements (1) kontaktiert, **dadurch gekennzeichnet, dass** die Vereinzelungseinheit (100) zwei Stößel (101; 101a, 101b) aufweist, die mit einer mit der Betätigungseinheit gekoppelten Wippe (102) gekoppelt sind und durch die Wippe (102) gegenläufig verfahrbar sind.

2. Anordnung nach Anspruch 1, bei der der Stößel (101) eine an den Vereinzelungsabschnitt (7) angepasste Kontur (110) aufweist, so dass in der Sperrposition die Kontur (110) den Vereinzelungsabschnitt (7) bevorzugt formschlüssig kontaktiert, wobei die Kontur (110) bevorzugt abgerundet ist und/oder entlang einer Längsrichtung des Stößels (101) schräg verläuft.

3. Anordnung nach Anspruch 1 oder 2, bei der die Betätigungseinheit (103) einen Drehmagnet (103) aufweist.

4. Anordnung nach einem der vorangegangenen Ansprüche, bei der die Vereinzelungseinheit (100) einen induktiven Sensor (111) aufweist, der zur Erkennung eines Transportelements (1) eingerichtet ist.

5. Anordnung nach einem der vorangegangenen Ansprüche, bei der der Laufabschnitt (14) des Transportelements (1) über den Vereinzelungsabschnitt (7) in den Halteabschnitt (4) übergeht.

6. Anordnung nach einem der vorangegangenen Ansprüche, bei dem das Kopfstück (3) und/oder das Koppelstück (5) ein magnetisches Material, bevorzugt ein ferromagnetisches Metall, aufweist, so dass das Transportelement (1) magnetisch mit einem Mitnehmer koppelbar ist.

7. Anordnung nach einem der vorangegangenen Ansprüche, bei der das Transportelement (1) eine Hohlkammer (15) aufweist, wobei die Hohlkammer (15) im Inneren des Transportelements (1), bevorzugt im Inneren des Halteabschnitts (4), angeordnet ist.

8. Anordnung nach Anspruch 7, bei dem die Hohlkammer (15) eine Einführöffnung (8) und/oder eine Abdeckung (9) aufweist.

9. Anordnung nach einem der vorangegangenen Ansprüche, bei der das Transportelement (1) ein Identifikationselement (10), bevorzugt einen RFID-Chip, aufweist.

10. Anordnung nach Anspruch 9 mit Rückbezug auf einen der Ansprüche 7 oder 8, bei dem das Identifikationselement (10) in der Hohlkammer (15) angeordnet ist.

11. Anordnung nach einem der vorangegangenen Ansprüche, bei der der Haltabschnitt (4) eine Aufweitung (18) mit einer Breite (B2) aufweist, wobei die Breite (B2) größer als eine Breite (B1) des Laufabschnitts (14) und/oder des Vereinzelungsabschnitts (7) ist.

12. Anordnung nach einem der vorangegangenen Ansprüche, bei der der Halter (6) des Transportelements (1) eine seitliche Verbreiterung (13) und/oder zumindest abschnittsweise eine gerundete Haltefläche (17) aufweist.

13. Anordnung nach einem der vorangegangenen Ansprüche, bei der mindestens eine der Kanten des Laufabschnitt (14), Vereinzelungsabschnitt (7) und/oder der Halteabschnitt (4) eine Abkantung (19) aufweist.

## Claims

1. An arrangement of a separating unit (100) and a transport element (1), wherein the transport element (1) has a running section (14) with at least one roller (2), a head piece (3) with a coupling piece (5) for coupling to a driver, and a holding section (4) with a holder (6), wherein the transport element (1) has a separating section (7), wherein the separating unit (100) has at least one plunger (101) which is coupled to an actuating unit (103), wherein the plunger is configured to be moved by the actuating unit (103) between a blocking position, in which the transport element (1) is blocked, and a release position, in which the transport element (1) is released, wherein, in the blocking position, the plunger (101) contacts the separating section (7) of the transport element (1), **characterized in that** the separating unit (100) has two plungers (101; 101a, 101b) which are coupled to a rocker (102) coupled to the actuating unit and can be moved in opposite directions by the rocker (102).

2. The arrangement according to claim 1, in which the plunger (101) has a contour (110) adapted to the separating section (7), so that, in the blocking position, the contour (110) preferably contacts the separating section (7) in a form-fitting manner, wherein the contour (110) is preferably rounded and/or runs obliquely along a longitudinal direction of the plunger (101).

3. The arrangement according to claim 1 or 2, in which the actuating unit (103) has a rotary magnet (103).

4. The arrangement according to any one of the preceding claims, in which the separating unit (100) has an inductive sensor (111), which is configured to detect a transport element (1).

5. The arrangement according to any one of the preceding claims, in which the running section (14) of the transport element (1) merges into the holding section (4) via the separating section (7).

6. The arrangement according to any one of the preceding claims, in which the head piece (3) and/or the coupling piece (5) comprises a magnetic material, preferably a ferromagnetic metal, so that the transport element (1) can be magnetically coupled to a driver.

7. The arrangement according to any one of the preceding claims, in which the transport element (1) has a hollow chamber (15), wherein the hollow chamber (15) is arranged inside the transport element (1), preferably inside the holding section (4).

8. The arrangement according to claim 7, in which the hollow chamber (15) has an insertion opening (8) and/or a cover (9).

9. The arrangement according to any one of the preceding claims, in which the transport element (1) has an identification element (10), preferably an RFID chip.

10. The arrangement according to claim 9 with reference to any one of claims 7 or 8, in which the identification element (10) is arranged in the hollow chamber (15).

11. The arrangement according to any one of the preceding claims, in which the holding section (4) has a widening (18) with a width (B2), wherein the width (B2) is greater than a width (B1) of the running section (14) and/or of the separating section (7).

12. The arrangement according to any one of the preceding claims, in which the holder (6) of the transport element (1) has a lateral widening (13) and/or at least in sections a rounded holding surface (17).

13. The arrangement according to any one of the preceding claims, in which at least one of the edges of the running section (14), separating section (7) and/or the holding section (4) has a fold (19).

## Revendications

1. Disposition d'une unité de séparation (100) et d'un élément de transport (1), dans lequel l'élément de transport (1) comprend une portion de roulement (14) avec au moins un galet (2), une pièce de tête (3) avec une pièce de couplage (5) pour le couplage avec un taquet d'entraînement, et une portion de maintien (4) avec un support (6), dans lequel l'élément de transport (1) comprend une portion de séparation (7), dans lequel l'unité de séparation (100) comprend au moins un poussoir (101) qui est couplé avec une unité d'actionnement (103), dans lequel le poussoir est conçu pour être déplacé par l'unité d'actionnement (103) entre une position de blocage, dans laquelle l'élément de transport (1) est bloqué, et une position de libération, dans laquelle l'élément de transport (1) est libéré, dans lequel, dans la position de blocage, le poussoir (101) entre en contact avec la portion de séparation (7) de l'élément de transport (1), **caractérisé en ce que** l'unité de séparation (100) comprend deux poussoirs (101 ; 101a, 101b) qui sont couplés avec une bascule (102) couplée avec l'unité d'actionnement et peuvent être déplacés à contresens par la bascule (102).

2. Disposition selon la revendication 1, dans laquelle le poussoir (101) présente un contour (110) adapté à la portion de séparation (7), de sorte que, dans la position de blocage, le contour (110) entre en contact de préférence par complémentarité de forme avec la portion de séparation (7), dans lequel le contour (110) est de préférence arrondi et/ou s'étend de manière oblique le long d'une direction longitudinale du poussoir (101).

3. Disposition selon la revendication 1 ou 2, dans laquelle l'unité d'actionnement (103) comprend un aimant rotatif (103).

4. Disposition selon l'une des revendications précédentes, dans laquelle l'unité de séparation (100) comprend un capteur inductif (111) qui est conçu pour détecter un élément de transport (1).

5. Disposition selon l'une des revendications précédentes, dans laquelle la portion de roulement (14) de l'élément de transport (1) passe d'une portion de séparation (7) à la portion de maintien (4).

6. Disposition selon l'une des revendications précédentes, dans laquelle la pièce de tête (3) et/ou la pièce de couplage (5) présente un matériau magnétique, de préférence un matériau ferromagnétique, de sorte que l'élément de transport (1) peut être couplé magnétiquement avec le taquet d'entraînement.

7. Disposition selon l'une des revendications précédentes, dans laquelle l'élément de transport (1) présente une cavité (15), dans laquelle la cavité (15) est disposée à l'intérieur de l'élément de transport (1), de préférence à l'intérieur de la portion de maintien (4).

8. Disposition selon la revendication 7, dans laquelle la cavité (15) présente une ouverture d'entrée (8) et/ou un recouvrement (9).

9. Disposition selon l'une des revendications précédentes, dans laquelle l'élément de transport (1) comprend un élément d'identification (10), de préférence une puce RFID.

10. Disposition selon la revendication 9 en référence à une des revendications 7 ou 8, dans laquelle l'élément d'identification (10) est disposé dans la cavité (15).

11. Disposition selon l'une des revendications précédentes, dans laquelle la portion de maintien (4) présente un évasement (18) avec une largeur (B2), dans laquelle la largeur (B2) est plus grande qu'une largeur (B1) de la portion de roulement (14) et/ou de la portion de séparation (7).

12. Disposition selon l'une des revendications précédentes, dans laquelle le support (6) de l'élément de transport (1) présente un élargissement latéral (13) et/ou au moins à certains endroits une surface de maintien arrondie (17).

13. Disposition selon l'une des revendications précédentes, dans laquelle au moins une des arêtes de la portion de roulement (14), de la portion de séparation (7) et/ou de la portion de maintien (4) présente un chanfrein (19).
